# EUROPÄISCHE PATENTSCHRIFT

(11) **EP 3 206 867 B1**
(45) Veröffentlichungstag und Bekanntmachung des Hinweises auf die Patenterteilung: **23.09.2020**
(21) Anmeldenummer: 15790455.8
(22) Anmeldetag: 16.10.2015
(51) Int. Cl.: B32B 5/26, B60R 21/233, B63B 7/08

(54) **VERFAHREN ZUM HERSTELLEN EINES TEXTILEN ODER FOLIENBASIERTEN FLÄCHENGEBILDES MIT MEHRKAMMERSTRUKTUR**
METHOD FOR PRODUCING A TEXTILE OR FILM-BASED SHEET MATERIAL HAVING A MULTI-CHAMBER STRUCTURE
PROCÉDÉ DE PRODUCTION D'UNE NAPPE TEXTILE OU À BASE DE FILM, À STRUCTURE MULTICELLULAIRE

(30) Priorität: 17.10.2014 DE 102014015376
(43) Veröffentlichungstag der Anmeldung: 23.08.2017
(73) Patentinhaber: Universität Stuttgart, 70174 Stuttgart (DE)
(72) Erfinder: SCHMID, Fabian, 73733 Esslingen (DE); SOBEK, Werner, 70180 Stuttgart (DE); HAASE, Walter, 71157 Hildrizhausen (DE)
(74) Vertreter: Müller-Boré & Partner Patentanwälte PartG mbB
(86) Internationale Anmeldenummer: PCT/EP2015/002053
(87) Internationale Veröffentlichungsnummer: WO 2016/058703

(56) Entgegenhaltungen:
- DE-A1-102012 224 178

## Beschreibung

Die Erfindung betrifft ein Verfahren zum Herstellen eines textilen oder folienbasierten Flächengebildes mit Mehrkammerstruktur, wobei das textile oder folienbasierte Flächengebilde ein mindestens zweilagiges vernähtes Gewebe, eine mindestens zweilagige verschweißte oder verklebte Folie, Kombinationen davon und/oder ein OPW Gewebe (One-Piece-Woven-Gewebe) ist, umfassend die Schritte der Ausbildung von Hilfskanälen (2) um die Form der Außenkontur der Kammern herum, des Befüllens der Hilfskanäle (2) mit einer dünnflüssigen, silikonbasierten Dichtmasse mit einem Zusatzstoff und des Aushärtens der Dichtmasse. Die Erfindung betrifft zudem die durch das erfindungsgemäße Verfahren erhaltenen Mehrkammer-Gefäße.

Textile oder folienbasierte Flächengebilde werden industriell vielfach und vielseitig eingesetzt. Ein Anwendungsbereich sind beispielsweise Airbags, auch Luftsäcke genannt, als Schutzvorrichtung im Fahrzeuginnenraum bei einer Fahrzeugkollision. Airbags, die aus sogenanntem OPW-Material (one piece woven) bestehen, können durch flottierende Fäden und Nähte formgewünscht (im aktivierten Zustand bzw. mit Gas gefüllt) ausgebildet sein. Das OPW-Material besteht aus mindestens zwei Lagen, die in den Bereichen, die sich nicht entfalten und der Halterung und Abdichtung dienen, eins sind (d.h. integral bzw. einlagig). In der Regel ist an diesen Stellen keine vollständige Dichtung gegen Fluid-Austritt erwünscht, da sich bei Belastung das Füllgas elastisch federnd über die verschiedenen Kammern, z.B. eines Seiten-Airbag, verteilen soll.

Ein anderer Anwendungsbereich für textile oder folienbasierte Flächengebilde ist ein Flächengebilde mit zahlreichen einzelnen Kammern, die mit einem Fluid, z.B. Wasser, zu befüllen oder zu durchströmen sind. Hier ist an den integralen Stellen des OPW-Materials beim Übergang zur zwei- oder mehrlagigen Struktur eine hinreichende Dichtung erwünscht. Anstelle eines OPW-Materials sind auch mindestens zweilagige Folien oder Textillagen einsetzbar, die anderweitig verbunden sind und in die Hilfskanäle eingearbeitet wurden.

Bislang wurden zur Abdichtung der Stellen zwischen den Kammern z.B. Klebstoffe oder Übernähungen eingesetzt. Beide Lösungen erfordern einen zeitlichen und/oder materiellen Mehraufwand und besitzen zudem Anwendungsnachteile. Insbesondere die mit Klebstoff vorgenommenen Abdichtungen können aufgrund ihrer ungünstigen mechanischen Eigenschaften bei Belastung der Kammern durch Befüllung mit einem Fluid zu Sollbruchstellen werden.

EP 1 377 499 B1 betrifft ein flexibles Gefäß für den Transport eines großen Flüssigkeitsvolumens, hergestellt aus hitzebeständigem OPW-Gewebe mit einem äußeren flächigen thermoplastischen Überzug aus u.a. Silikonpolymeren, der durch thermisches Verschmelzen erzeugt wird und sich dabei mit dem Kerngewebe flächig verbindet. Zielsetzung in EP 1377499 ist es, einen schwimmfähigen und damit wasserdichten Behälter zu erhalten.

WO 2012/126614 A1 beschreibt Gegenstände aus OPW-Gewebe, in welches Kammern zur Befüllung mit Luft oder anderen Fluiden ausgebildet worden sind, wobei eine Abdichtung der textilen Flächengebilde durch eine Beschichtung vorgesehen ist.

DE 10 2012 224178 beschreibt einen Seitenairbag, enthaltend zwei Gassacklagen, worin die Nahtverbindung auf der Innenseite des Gassacks mittels einer Silikonschicht abgedichtet ist.

Der vorliegenden Erfindung liegt somit die Aufgabe zugrunde, eine verbesserte/stabilere Abdichtung der Kammergrenzen in einfacher und zuverlässiger Weise zu erzeugen. Insbesondere sollen dichte Kammerstrukturen zur Befüllung mit Fluiden erzeugt werden. Fluide können im Sinne der vorliegenden Erfindung flüssig, wie Wasser; viskos-flüssig, wie Gele, Glycerin oder Erdöl; dispergiert, wie Wasser-Sand-Gemenge, Mörtel oder Putz; fest-flüssig, wie Feinsand, Salze, oder Staub; oder gasförmig, wie Luft, Stickstoff, Gemische von Sauerstoff und Stickstoff, Edelgase oder Kohlenstoffdioxid, sein.

In der vorliegenden Erfindung erfolgt diese Abdichtung z.B. durch einen separat abgesteppten Hilfskanal im Gewebe. Diese Art der Dichtung kann zudem auch bei mindestens zweilagigen Flächengebilden, z.B. aus Geweben und/oder Folien, eingesetzt werden, bei denen Grenzen zu Kammern durch Vernähen oder Verschweißen hergestellt werden.

Überraschenderweise wurde gefunden, dass durch die gezielte Abdichtung der Kammergrenzen (hier treffen mehrere Gewebelagen zusammen) über separat abgesteppte Hilfskanäle mit einem geeigneten hinreichend fließfähigen Silikonwerkstoff als Dichtmasse die vorstehend definierte Aufgabe gelöst wird.

Die Erfindung betrifft daher gemäß Anspruch 1 ein Verfahren zum Herstellen eines bei Befüllung mit Fluiden dichten, textilen oder folienbasierten Flächengebildes mit Mehrkammerstruktur (1), wobei das textile oder folienbasierte Flächengebilde ein mindestens zweilagiges vernähtes Gewebe, eine mindestens zweilagige verschweißte oder verklebte Folie, Kombinationen davon und/oder ein OPW Gewebe ist, umfassend die Schritte der Ausbildung von Hilfskanälen (2) mindestens teilweise, in der Regel vollständig, um die Form der Außenkontur der Kammern herum, d.h. an den Nahtstellen, des Befüllens der Hilfskanäle (2) mit einer dünnflüssigen, silikonbasierten Dichtmasse mit einem Zusatzstoff und des Aushärtens der Dichtmasse. Gemäß der vorliegenden Erfindung werden Hilfskanäle (2), die in einem textilen oder folienbasierten Flächengebilde (1) mit Mehrkammerstruktur entlang einer Kammer (1) integriert sind, mit einer Dichtmasse gegen Fluide gefüllt, wobei zur Befüllung eine silikonbasierte Dichtmasse mit einem Zusatzstoff eingesetzt wird und wobei der Zusatzstoff in einer solchen Menge eingesetzt wird, dass die zubereitete Dichtmasse die Hilfskanäle im Wesentlichen vollständig ausfüllt und in einem angemessenen Zeitraum zu einer die Kammern entlang der Naht voneinander abdichtenden, stabilen und flexiblen Barriere härtet.

Weitere Gegenstände der vorliegenden Erfindung sind in den Unteransprüchen definiert.
Fig. 1 zeigt den schematischen Aufbau einer durch Hilfskanäle 2 abgedichteten Kammer 1.
Fig. 2 zeigt die erfindungsgemäße Ausgestaltung des Flächengebildes mit Mehrkammerstruktur, wobei dargestellt ist, dass Fluid von Kammer 5 nicht mehr in Kammer 5' (oder bei andere Druckbeaufschlagung auch umgekehrt) gelangt.
Fig. 3 zeigt die bisherige Lösung im Stand der Technik, wobei Fluid in die anderen Kammern gelangen kann.
Fig. 4 zeigt die Schnittskizze eines OPW-Gewebes am Übergangsbereich vom einlagigen zum mehrlagigen Teil und die erfindungsgemäße Lösung des Dichtigkeitsproblems an der betreffenden Stelle (Detailansicht von Fig. 2 um Bezugsziffer 6 herum, sofern das Material OPW ist).

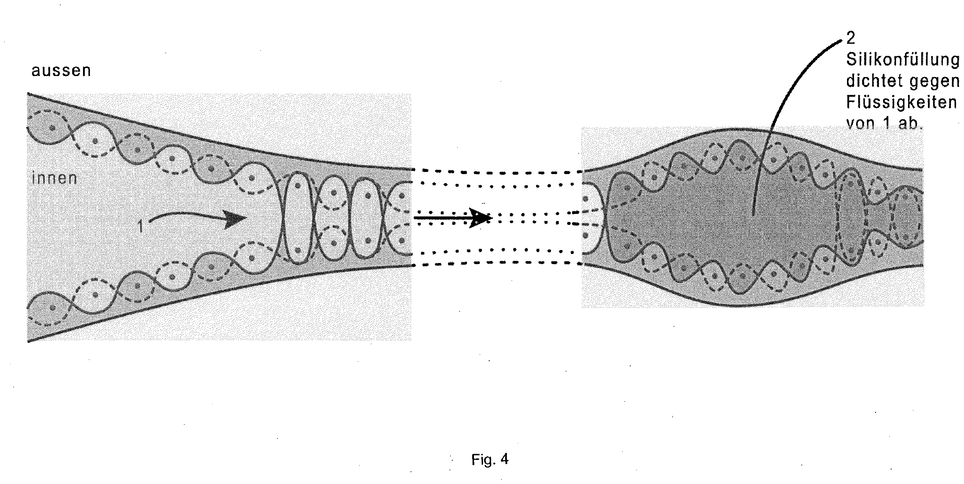

Je nach Kammermaterial kann auf dem textilen oder folienbasierten Flächengebilde gegebenenfalls auch eine zusätzliche flächige Abdichtung nach außen erforderlich sein. Solche Beschichtungen, z.B. mit Silikon, von Flächengebilden mit Kammern, wie z.B. Airbags, sind bekannt. Im Fall der OPW-Materialien ist es jedoch erwünscht, neben der gegebenenfalls vorliegenden flächigen Abdichtung auf der Außenseite auch eine Abdichtung an der Zusammenführung im Gewebe vorliegen zu haben (vgl. Schnittzeichnung in Fig. 4). Beim OPW-Material werden mindestens 4 Faserlagen zusammengeführt. An der Zusammenführung entstehen kleine Löcher, die zu einem Durchdringen von Flüssigkeiten und Gasen in der Gewebeebene führen (vgl. Bezugsziffer 1 in Fig. 4). In manchen Fällen ist an dieser Stelle der Austritt von Gas unter Umständen erwünscht, z.B. im Falle der Anwendung des OPW-Materials bei gewissen Ausgestaltungen von Airbags, um das Abfederungsverhalten dieses Airbags einstellen zu können. Im Fall eines dichten Fluidbehälters muss aber an dieser Stelle eher eine Abdichtung erfolgen. Bekannt sind drei Varianten, wie dieses Dichtigkeitsproblem in der Gewebeebene zu lösen wäre:
1. Abdichten von innen: Dies gelingt eher bei großen Strukturen. Allerdings ist dies bei Geweben mit typischen Dicken von 0,5 bis 10 cm kaum effizient zu erzielen. Eingebrachte Beschichtungen verkleben Teilbereiche des Behälters, die dann nicht mehr nutzbar sind. Zudem besteht bei Behältern, die von Flüssigkeiten durchflossen werden, die Gefahr, dass die Beschichtung mit der Zeit ausgewaschen wird.
2. Verschweißen der Außenkontur: Auch hier stellt sich das Problem der Abmessungen. Ein Verschweißen erscheint erst einmal erfolgreich. Bei der Verwendung der flexiblen Behälter brechen dann aber wiederum die steifen Schweißnähte und führen beim Gebrauch zu Undichtigkeiten.
3. Verkleben der Außenkontur: Dieses Verfahren ist möglich, aber aufwendig, da jedes Mal eine Form mit entsprechender Außenkontur erstellt werden muss, in der das konfektionierte Textil eingelegt, der Kleber aufgebracht wird und die Aushärtung erfolgen kann.

Die erfindungsgemäße Lösung ist kurz gefasst nun die Ausbildung eines Hilfskanals um die Form der Außenkontur von Kammern in mehrlagigen Flächengebilden herum, d.h. an den Kammer-Nahtstellen, Befüllen des Kanals mit einer geeignet dünnflüssigen silikonbasierten Dichtmasse und deren Aushärten.

Verwendet man bekannte dünnflüssige silikonbasierte Dichtmassen niederer Viskosität, besteht die Gefahr, dass diese nicht hinreichend aushärten. Verwendet man flüssige, zu rascher und gründlicher Aushärtung befähigte silikonbasierte Dichtmassen höherer Viskosität, können diese aufgrund der großen Oberflächenspannung und der resultierenden Reibung nur in einen begrenzten, zu kleinen Bereich eingebracht werden.

Unter "dünnflüssig" im Rahmen der vorliegenden Erfindung wird eine Flüssigkeit mit einer dynamischen Viskosität bei Raumtemperatur (20°C) im Bereich von 500 bis 10.000 mPas (DIN 53018) verstanden.

Als silikonbasierte Dichtmasse wird ein härtendes Silikon-Material verwendet, dem ein Zusatzstoff zugesetzt wird, der die Fließfähigkeit des härtenden Silikon-Materials erhöht und dadurch ein einfaches Befüllen der Hilfskanäle entlang der Kammergrenzen (z.B. ohne oder mit geringer Druckanwendung) ermöglicht. Durch die Verwendung dieser aufgrund von Zusatzstoffen niedriger viskosen Dichtmasse kann ein Befüllen der Kammern ohne hohen oder schädigenden Einpressdruck erzielt werden.

Der ausgewählten silikonbasierten Dichtmasse wird ein Zusatzstoff hinzugefügt, der deren Oberflächenspannung vermindert, sodass eine für Befüllvorgänge hinreichende Viskosität erreicht wird und dennoch eine in absehbarer Zeit ausreichende Härtung erfolgt. Das heißt, dass das Gemisch nach einer Verarbeitungsstandzeit abbindet und in einen festen Zustand wechselt.

Der Zusatzstoff ist vorzugsweise ein niederer Alkohol, vorzugsweise ein linearer und/oder verzweigter C1-C5-Alkohol, besonders bevorzugt ein Propanol bzw. Propyl-alkohol (d.h. n-Propanol und/oder iso-Propanol).

Als silikonbasierte Dichtmasse kann vorzugsweise ein Material verwendet werden, das im Wesentlichen auf Polysiloxanen beruht und durch Kieselsäureorthoester ggf. in Gegenwart eines Katalysators unter Austritt von Alkohol, in der Regel Ethanol, vernetzt. Dabei oder danach wird durch Zugabe des Zusatzstoffes die Viskosität in geeigneter Weise herabgesetzt. Ohne an eine Theorie gebunden zu sein, wird angenommen, dass ein wie vorstehend beschriebener niederer Alkohol die Moleküle von Polysiloxan und Kieselsäureorthoester soweit voneinander im Abstand hält, dass einerseits eine für das Befüllen zweckmäßig niedrige Viskosität erzielt wird, andererseits die Reaktivität der Reaktionspartner so eingestellt werden kann, dass die silikonbasierte Dichtmasse in hinreichender Zeit, wie 10 bis 90 min, vorzugsweise 20 bis 70 min, insbesondere 30 bis 60 min in den Hilfskanälen aushärtet und die einlagigen Stellen zwischen den Kammern abdichtet. Das ist insofern überraschend, da eigentlich eine Störung des Abbindens durch den OH-Gruppen tragenden Alkohol zu erwarten wäre. Die Menge an Zusatzstoff richtet sich nach den geometrischen Abmessungen der Hilfskanäle. Dadurch kann die Menge an Zusatzstoff gemäß den geometrischen Abmessungen der Hilfskanäle eingestellt werden. Es sollte eine Viskosität erzielt werden, die lange Hilfskanäle oder Hilfskanalsysteme ohne Anwendung von äußerem Druck problemlos befüllt. Das Optimum wird vom Fachmann leicht durch Versuchsführung gefunden.

Hierdurch wird die Voraussetzung für die technische Umsetzung eines schnellen und effizienten automatischen Verfahrens zur Füllung der Hilfskanäle an den Nähten erzielt.

Die Dichtmasse bindet nach einer bestimmten Verweildauer, z.B. nach 30 - 40 min, ab. Die Dichtmasse weist nach dem Aushärten vorzugsweise eine Shore-Härte A von <10, vorzugsweise 0, auf. Die im Rahmen des Aushärteprozesses entstehenden Ausdünstungen müssen durch das Kammermaterial entweichen können, weshalb vorzugsweise gut diffusionsfähige Kammermaterialien eingesetzt werden. Kombinationen von Gewebe oder Vlies und Folien oder ein OPW gewährleisten dies. Im Fall von Folien als Flächengebilde muss für eine entsprechende Diffusionsfähigkeit durch z.B. gezielt gewählte Materialeigenschaften oder Nadelung gesorgt werden. Vorteilhafterweise kommen OPW-Gewebe zum Einsatz, deren Geometrie flexibel an die Anwendungs- und/oder Transportbedingungen adaptierbar sind. Die Anforderung an Gewebe oder Folie ist eine Diffusionsfähigkeit für Molekülgrößen bis 0,1 nm³.

Das Gewebe kann aus Polymer, z.B. Fasern von Polyamid, wie Nylon, Polyester, PEEK, PEKK, Aramid, Carbon oder Polyolefin bestehen. Es kann auch aus anorganischen Fasern bestehen, wie Glas-, Steinwolle-, Asbest- oder MetallFasern, wie Stahl- oder Silber-Fasern. Des Weiteren kann das Flächengebilde aus Polymerfolien, z.B. aus den oben genannten Polymeren, Metallfolie, Papier, Vlies oder Kombinationen bestehen. Auch Kombinationen aus den vorstehend genannten Geweben und Nicht-Geweben sind möglich.

Bei Geweben kann der Einzel-Titer der Filamente des verwendeten Garns im Bereich von 1 bis 3 dtex liegen. In anderen Ausführungsformen kann er aber auch > 5dtex betragen. Der Gesamttiter des Garns kann im Bereich von 200 bis 500 dtex, insbesondere 315 bis 400 dtex, liegen.

Die Hilfskanäle können in ihrer Höhe das 0,01-fache bis zum 50-fachen der ohne Krafteinwirkung gemessenen Dicke des Flächengebildes betragen. Die Breite der Hilfskanäle kann das 0,1-fache bis zum 200-fachen der Dicke des Flächengebildes betragen. Die Gewebedicke liegt für Fluide im Bereich von 1 bis 0,1 mm, vorzugsweise im Bereich von 0,8-0,2 mm, insbesondere im Bereich von 0,5 bis 0,25 mm. Für weitere Zwecke sind Dicken von 0,01 bis 20 mm oder 0,05 bis 10 mm oder 0,2 bis 5 mm, z.B. 0,4 bis 2 mm, angemessen.

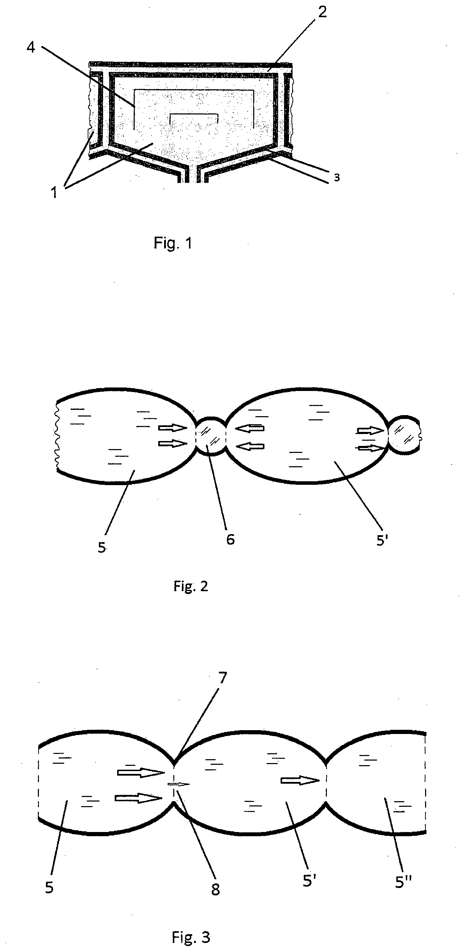

Grundsätzlich sollte die Größe des mit Silikon befüllten Hilfskanals so ausgelegt sein, dass beim Beschicken der Kammern mit einem Fluid dieses nicht von einer Kammer über die Naht bei gebrauchsüblicher Belastung in eine andere Kammer gelangt, vgl. Fig. 2. Durch die mit Silikon befüllten Hilfskanäle 6 kann kein Fluid von Kammer 5 in Kammer 5' gelangen. Im Gegensatz dazu kann gemäß dem Stand der Technik je nach Druckbeaufschlagung Fluid aus Kammer 5 in Kammer 5', 5" usw. gelangen, vgl. Fig. 3.

Durch das erfindungsgemäße Verfahren ist es möglich, Kammern mit kleinen Durchmessern zu befüllen, z.B. schlauchähnlich Gebilde mit 5-10 mm Durchmesser und 2 bis 3 m Länge. So entstehen Lagerbehälter aus textilen Werkstoffen für flüssige Produkte. Der Vorteil der Herstellung von Lagerbehältern mit Geweben liegt in einer gezielten Manipulation der Behältergeometrie durch den Web-Vorgang. Damit sind hochwertige, wiederverwendbare und geometrisch optimierbare Behälter herstellbar.

Die so erfindungsgemäß hergestellten Gegenstände, d.h. entsprechend abgedichtete Kammerstrukturen, können allgemein für den Transport, die Lagerung oder Speicherung von Fluiden eingesetzt werden. Auch der Einsatz als Solarkollektoren ist möglich. Im Bauwesen sind Anwendungen als Isolations- oder Schalldämmungsmaterial denkbar. Dabei werden die Materialien aufgerollt transportiert und vor Ort verbaut. Dadurch werden Masse- und Ressourcenverbrauch vermindert. Zudem sind aufgrund der geringeren Massen vereinfachte Aufbauten, z.B. als Fassadenelemente, möglich. Die Herstellung von Design-Gefäßen mit außergewöhnlichen Geometrien kann für Innenausstatter interessant sein. Im Bereich der Medizintechnik ist die Entwicklung neuer Produkte für die Bevorratung von Arzneien oder Nährlösungen denkbar.

### Bezugszeichenliste

- 1.: Kammer in einem einlagig/mehrlagigen Flächengebilde zur Befüllung mit einem Fluid, wie Wasser oder Luft
- 2: Hilfskanal, der gemäß der Erfindung mit Dichtmasse befüllt ist
- 3: umlaufende Vernähungen/Zusammenführung der Gewebelagen unter Ausbildung eines Kanals für die Abdichtung
- 4: Abnähung oder Absteppung
- 5: Kammer mit Fluid
- 6: Silikon-Barriere im Hilfskanal
- 7: Naht im mehrlagigen Teil zwischen einlagigen Kammerbereichen 5
- 8: Durchtritt von linker Kammer 5 zu rechter Kammer 5' usw. möglich (je nach Druckbeaufschlagung auch umgekehrt)

## Patentansprüche

1. Verfahren zum Herstellen eines bei Befüllung mit Fluiden dichten, textilen oder folienbasierten Flächengebildes mit Mehrkammerstruktur (1), wobei das textile oder folienbasierte Flächengebilde ein mindestens zweilagiges vernähtes Gewebe, eine mindestens zweilagige verschweißte oder verklebte Folie, Kombinationen davon und/oder ein OPW Gewebe ist, umfassend die Schritte der Ausbildung von Hilfskanälen (2) mindestens teilweise um die Form der Außenkontur der Kammern herum, des Befüllens der Hilfskanäle (2) mit einer dünnflüssigen, silikonbasierten Dichtmasse mit einem Zusatzstoff und des Aushärtens der Dichtmasse.

2. Verfahren nach Anspruch 1, wobei als Zusatzstoff ein niederer Alkohol eingesetzt wird.

3. Verfahren nach Anspruch 2, wobei als niederer Alkohol ein C₁-C₅-Alkohol, vorzugsweise ein Propylalkohol eingesetzt wird.

4. Verfahren nach einem der vorangehenden Ansprüche, wobei nach der Befüllung die Dichtmasse mindestens 10 min aushärtet.

5. Verfahren nach Anspruch 4, wobei die Dichtmasse nach dem Aushärten eine Shore-Härte A von <10 aufweist.

6. Textiler oder folienbasierter Gegenstand, wobei das textile oder folienbasierte Flächengebilde ein mindestens zweilagiges vernähtes Gewebe, eine mindestens zweilagige verschweißte oder verklebte Folie, Kombinationen davon und/oder ein OPW Gewebe ist, ausgestattet mit Dichtmasse befüllten Hilfskanälen (2) um die Form der Außenkontur der Kammern herum, erhältlich nach einem der vorangehenden Ansprüche.

## Claims

1. A method of manufacturing a textile or foil-based sheet body which is fluidtight on filling with fluids and has a multicompartment structure (1), wherein the textile or foil-based sheet body is an at least two-ply stitched woven fabric, an at least two-ply fused, welded or adhered foil, a combination thereof and/or a one-piece woven (OPW) fabric,
comprising the steps of forming auxiliary channels (2) at least partly around the shape of the outer contour of the compartments; filling the auxiliary channels (2) with a mobile silicone-based sealant comprising an additive; and curing the sealant.

2. A method according to claim 1 wherein the additive used is a lower alcohol.

3. A method according to claim 2 wherein the lower alcohol used is a C₁-C₅ alcohol, preferably a propyl alcohol.

4. A method according to any preceding claim wherein the sealant cures for not less than 10 min after the step of filling.

5. A method according to claim 4 wherein the sealant has a Shore A hardness of <10 after curing.

6. A textile or foil-based article wherein the textile or foil-based sheet body is an at least two-ply stitched woven fabric, an at least two-ply fused, welded or adhered foil, a combination thereof and/or a one-piece woven (OPW) fabric, endowed with sealant-filled auxiliary channels (2) around the shape of the outer contour of the compartments, obtainable according to any one of the preceding claims.

## Revendications

1. Procédé de production d'un corps plan textile ou à base de feuille, qui est étanche aux fluides lors du remplissage avec des fluides et a une structure multicompartimentée (1), dans lequel le corps textile ou à base de feuille est un tissu tissé à au moins deux épaisseurs cousues, une feuille à au moins deux épaisseurs fusionnées, soudées ou adhérées, une combinaison de ceux-ci et/ou un tissu tissé en une pièce,
comprenant les étapes de formation de canaux auxiliaires (2) au moins partiellement autour de la forme du contour extérieur du compartiment ; le remplissage des canaux auxiliaires (2) à l'aide d'un agent de scellement mobile à base de silicone, comprenant un additif, et le durcissement de l'agent de scellement.

2. Procédé selon la revendication 1, dans lequel l'additif utilisé est un alcool inférieur.

3. Procédé selon la revendication 2, dans lequel l'alcool inférieur utilisé est un alcool en C₁-C₅, de préférence le propanol.

4. Procédé selon l'une quelconque des revendications précédentes, dans lequel l'agent de scellement durcit en moins de 10 minutes après l'étape de remplissage.

5. Procédé selon la revendication 4, dans lequel l'agent de scellement a une dureté Shore A <10 après durcissement.

6. Article textile ou à base de feuille, dans lequel le corps plan textile ou à base de feuille est un tissu tissé à au moins deux épaisseurs cousues, une feuille à au moins deux épaisseurs fusionnées, soudées ou adhérées, une combinaison de ceux-ci et/ou un tissu tissé en une pièce, doté de canaux auxiliaires (2) remplis d'un agent de scellement, autour de la forme du contour extérieur des compartiments, pouvant être obtenu selon l'une quelconque des revendications précédentes.
